Europäisches Patentamt

European Patent Office

Office européen des brevets

(11) Veröffentlichungsnummer: **0 447 666 A1**

# (12) EUROPÄISCHE PATENTANMELDUNG

(21) Anmeldenummer: 90125182.7

(22) Anmeldetag: 21.12.90

(51) Int. Cl.5: **B23K 35/368**

(30) Priorität: 19.03.90 US 495696

(43) Veröffentlichungstag der Anmeldung:
25.09.91 Patentblatt 91/39

(84) Benannte Vertragsstaaten:
AT BE CH DE DK ES FR GB GR IT LI LU NL SE

(71) Anmelder: THE LINCOLN ELECTRIC
COMPANY
22801 St. Clair Avenue
Cleveland, Ohio 44117-1199(US)

(72) Erfinder: Chai, Chang-Shung
609 Hanford Drive
Highland Heights, Ohio 44143(US)
Erfinder: Fink, David A.
2581 Charney Road
University Heights, Ohio 44118(US)
Erfinder: Gonzalez, John
35615 Timber Ridge Lane
Willoughby, Ohio 44094(US)

(74) Vertreter: Vollbach, Hans, Dipl.-Ing. et al
Patentanwälte Dipl.-Ing. Buschhoff Dipl.Ing
Hennicke Dipl.-Ing. Vollbach
Kaiser-Wilhelm-Ring 24
W-5000 Köln 1(DE)

(54) Basische Metall Kernelektrode mit niedrigem Wasserstoffgehalt.

(57) Die Erfindung betrifft ein im Schweißbetrieb abschmelzendes Schweißelement für das Lichtbogenschweißen mit einem Stahlmantel (12), der einen kompakten bzw. verdichteten Kern umschließt, der Metallegierungspulver (20) und eine im wesentlichen zu 100 % basische Verbindung in einer Menge unterhalb etwa 1,6 Gew.-% enthält. Diese basische Verbindung besteht aus Calciumfluoridpulver (22), dessen Anteil vorzugsweise im Bereich von etwa 0,1 % bis 0,9 %, bezogen auf das Gesamtgewicht des Schweißelemtentes, beträgt. Nach einem weiteren Merkmal der Erfindung enthält das Kernmaterial ferner ein spezielles Mittel (24) zur Verminderung der Menge an diffundierbarem Wasserstoff im Schweißmetall. Das erfindungsgemäße Schweißelement kann als Füll- oder Zusatzmetall für das TIG-Schweißen verwendet werden. Vorzugsweise wird es als abschmelzende Elektrode beim MIG-Schweißen eingesetzt.

FIG. I

Die Erfindung liegt auf dem Gebiet der abschmelzenden Schweißelemente, wie eines Elektroden-Zusatzmaterials und abschmelzender Elektroden, wie vor allem einer basischen Metall-Kernelektrode, wie sie beim Lichtbogenschweißen zum Einsatz kommen. Zugleich ist die Erfindung auf eine weitere Ausgestaltung der Schweißelemente nach der älteren europäischen Patentanmeldung Nr. 90 116 555.5 gerichtet.

Demgemäß bezieht sich die Erfindung auf ein abschmelzendes Schweißelement, das als Schweißzusatz bzw. Zusatzmetall beim TIG-Schweißen (Inertschutzgas-Lichtbogenschweißen) oder als abschmelzende Elektrode beim MIG-Schweißen verwendet werden kann, und zwar bevorzugt beim MIG-Schweißen hochfester Metalle derjenigen Art, wie sie in bestimmten militärischen und industriellen Anwendungsbereichen gefordert werden. Die Erfindung wird im Zusammenhang mit diesem Anwendungsbereich erläutert, wobei diese Erläuterung aber für alle Anwendungsbereiche der Erfindung Geltung hat.

Beim elektrischen Lichtbogenschweißen bedient man sich des MIG-Schweißprozesses, bei dem ein Metalldraht, der eine abschmelzende Elektrode bildet, unter Lichtbogenbildung zwischen ihm und dem Werkstück gegen letzteres vorgeschoben wird, wobei das Ende des Drahtes bzw. der Elektrode zur Ablagerung von Metall auf dem Werkstück aufgeschmolzen wird. Das MIG-Schweißverfahren weist bezüglich der genauen Zusammensetzung der sich im Schweißprozeß aufzehrenden Elektrode einen hohen Entwicklungsstand mit komplexer Technologie auf.

Die Zusammensetzung der Elektrode, das System an Flußmittel bzw. Zusatzmaterial, die Art des elektrischen Stromes, das Schutzgas und weitere Faktoren werden auf die jeweils gewünschten Schweißaufgaben eingestellt und abgestimmt. Eine Hauptaufgabe bei jedem Lichtbogenschweißprozeß besteht in der Erreichung einer hohen Abschmelzleistung, die beim MIG-Verfahren im allgemeinen für das Schweißen in der Vertikalebene oberhalb etwa 2,25 kg/h liegt. Das sich einstellende Schweißmetall muß eine gute Schweißraupenbildung, eine geringe Schlackenbildung auf der Schweißraupe und weitere physikalische Eigenschaften aufweisen, um den Arbeitsaufwand für das Reinigen der Schweißnaht nach erfolgtem Schweißvorgang möglichst klein zu halten. Außerdem muß das Schweißmetall bzw. die Schweißraupe der Schweißverbindung bestimmte physikalische Eigenschaften aufweisen, wie eine geringe Tendenz zur Schweißrissigkeit und eine hohe Schlagfestigkeit bzw. Kerbschlagzähigkeit (gemessen z.B. als Charpy-Schlagfestigkeit). Außerdem ist es wünschenswert, wenn die Schweißelektrode nicht nur für die waagerechte Schweißposition mit Schweißen von oben, sondern auch für andere Schweißpositionen, also für das nicht-gerichtete Schweißen, d.h. das Außer-Positions-Schweißen, verwendet werden kann. Alle diese Forderungen sind Gegenstand umfangreicher, in der Patentliteratur beschriebener Entwicklungen. Einzelheiten bezüglich der Zusammensetzungen der Elektroden brauchen hier nicht erörtert werden, da sie dem Fachmann bekannt sind.

Mit steigender Streckgrenze des Werkstückmetalls auf Festigkeitswerte, wie sie den militärischen Richtlinien HY-80, HY-100 und selbst HY-130 entsprechen, ergeben sich erhebliche Probleme in Bezug auf geringe Rißbildung und hohe Schlagfestigkeit, wenn die Möglichkeit gewahrt bleiben soll, auch beim nicht-gerichteten Schweißen mit hohen Abschmelzleistungen zu arbeiten. Beim Schweißen dieser hochfesten Stähle, wie insbesondere der in ihrer Festigkeit HY-80 (5624 kg/cm² bzw. 80.000 psi) übersteigenden Stähle, wird als abschmelzende Elektrode normalerweise eine massive Metalldrahtelektrode verwendet, die beim nicht-gerichteten Schweißen, d.h. beim Nicht-Positionsschweißen im allgemeinen einen Durchmesser von etwa 1,14 mm und die beim Schweißen von oben im allgemeinen einen Durchmesser von etwa 1,57 mm aufweist. Das Schweißen von hochfesten Stählen, die in ihrer Festigkeit dem Stahl HY-100 entsprechen oder dessen Festigkeit übersteigen, hat sich selbst mit solchen massiven MIG-Schweißdrähten als äußerst schwierig herausgestellt.

Die Erfindung ist darauf gerichtet, eine abschmelzende Elektrode für das MIG-Schweißen oder einen Zusatzdraht für das TIG-Schweißen zu schaffen, die bzw. der für hochfeste Stähle über HY-80 und bevorzugt für Stähle, deren Festigkeit bei HY-130 liegt, verwendet werden kann. Bemühungen, für diese Aufgabe eine brauchbare Lösung zu finden, führten in der Vergangenheit zur Verwendung eines massiven Schweißdrahtes bei entsprechender Einstellung der Legierungszusammensetzung und Vorwärmen des Werkstücks. Diese Bemühungen sind alles andere als erfolgreich gewesen. In der Schweißtechnik hat man stets außergewöhnliche Bemühungen darauf gerichtet, die Schweißelektrode im Hinblick auf eine Erleichterung des Schweißens hochfester Stähle bei geringer Neigung zur Rißbildung und hoher Schlagfestigkeit zu verbessern. Die Erfindung befaßt sich mit dieser Aufgabe.

Versuche, das MIG-Schweißen für hochfeste Stähle (oberhalb 5624 kg/cm²) mit hohen Abschmelzleistungen und hoher Schweißqualität anzuwenden, sahen, wie erwähnt, die Verwendung eines massiven Schweißdrahtes vor. Ein solcher Schweißdraht hat zwar die Eigenschaften, im Schweißmetall einen verhältnismäßig niedrigen diffundierbaren Wasserstoffpegel zu erzeugen; der diffundierbare Wasserstoff im Schweißmetall erhöht sich aber, wenn mit der Elektrode ein Zuschlag bzw. Flußmittel benötigt wird. Dies führt zu einer erhöhten Schweißrissigkeit des Schweißmetalls. Im Hinblick auf die Neigung der Flußmittelbestandteile, den diffundierbaren Wasserstoff im Schweißmetall zu erhöhen, hat sich allgemein die Auffassung durchgesetzt, daß Metallkernelektroden bzw. Seelenelektroden für das MIG-Schweißen von hochfesten Werkstücken der vorgenannten Art nicht zufriedenstellend eingesetzt werden können. Der Einsatz und die Zusammensetzung des Füll- bzw. Seelenmaterials bewirken außerdem einen Anstieg im Sauerstoffgehalt des Schweißmetalls. Wenn daher, wie z.B. bei Schiffskörpern im Bereich einer extrem hohen Streckgrenze bzw. Streckfestigkeit gearbeitet wurde, so verlangten die militärischen Spezifikationen den Einsatz massiver Schweißdrähte. Dies begrenzte beim Außer-Positions-Schweißende Abschmelzleistung auf etwa 2,7 kg/h, die nur mit bestimmten elektrischen Impuls-Schweißmethoden erreichbar war. Unabhängig davon konnten mit dem Einsatz von massiven Schweißdrähten im Anwendungsbereich oberhalb der Streckgrenzen eines HY-100-Stahls keine zufriedenstellenden Ergebnisse erzielt werden. Wird eine Kern- bzw. Seelenelektrode eingesetzt, so ergibt sich ein höheres Niveau an diffundierbarem Wasserstoff im Schweißmetall, was die Neigung zur Rißbildung erhöht. Die Verwendung massiver Schweißdrähte für das Schweißen hochfester Stähle war daher die normale und als einzige akteptierte Praxis. Um die mechanischen Eigenschaften der Schweißverbindung zu erhöhen, wurde das Grundmetall häufig vor dem Schweißen vorgewärmt. Der Werkstoff der Massivdrahtelektrode mußte die Legierungsstoffe in genauen Anteilen enthalten. Die genaue Einstellung der Legierungszusammensetzung des Massivdrahtes ist äußerst kritisch und stellt eine schwierige metallurgische Aufgabe dar.

In der Schweißindustrie ist die Verwendung von Kern- bzw. Seelenelektroden für das MIG-Schweißen allgemein üblich. Mit diesen Elektroden läßt sich das Problem des Legierungsmetalls, das hier Bestandteil des Rohrelementes der Elektrode ist,vermindern,und zwar dadurch,daß die Legierungsmetalle in sehr genauen Anteilen im Kern- bzw. Füllinhalt vorgesehen werden, um die gewünschten Legierungseigenschaften und -anteile im entstehenden Schweißmetall zu erhalten. Obwohl die Verwendung einer Kern- bzw. Seelenelektrode mit einem Metallpulverkern zur Einstellung der Zusammensetzung des Schweißmetalls die Möglichkeit zur Einstellung der jeweiligen aktuellen Zusammensetzung des Schweißmetalls begünstigt, hat eine solche Elektrode die Neigung, eine erhebliche Menge an Sauerstoff in das Schweißmetall einzubringen, was zu einer Verminderung der Schlagfestigkeit bzw. der Kerbschlagzähigkeit des Schweißmetalls führt. Außerdem werden bei Verwendung einer solchen Elektrode im kritischen Hochfestigkeitsbereich Zuschlagstoffe bzw. Flußmittelbestandteile benötigt. Dies führt im Vergleich zur Verwendung einer Massivdrahtelektrode zu einem höheren Anteil an diffundierbarem Wasserstoff im Schweißmetall. Kern- bzw. Seelenelektroden sind auch etwas empfindlich in Bezug auf Abweichungen im elektrischen Elektrodenüberstand beim Schweißprozeß. Dieser Nachteil läßt sich zurückführen auf Feuchtigkeit im Elektrodenkern und in der Naht sowie auf Feuchtigkeit in dem um die Elektrode herum befindlichen Schutzgas. Die Verwendung von Metall-Kernelektroden (Seelenelektroden) mit ihren Vorteilen in Bezug auf die Einstellung der Schweißmetallzusammensetzung führt daher zu erheblichen Nachteilen und wurde demzufolge zum Schweißen hochfester Stähle derjenigen Art, wie sie im Schiffsbau verwendet werden, nicht in Betracht gezogen. Außerdem wurden solche Kernelektroden nicht allgemein beim Impuls-Schweißverfahren eingesetzt, wie dies beim Schweißen hochfester Stähle in Außer-Schweißposition vorgesehen wird.

Die Technologie des Schweißens hochfester Stähle (oberhalb 5624 kg/cm$^2$) hat in der Vergangenheit zur Entwicklung eines verwickelten MIG-Schweißprozesses unter Verwendung eines Massivschweißdrahtes geführt. Anregungen zur Verwendung von Metall-Kernelektroden, d.h. von Seelenelektroden haben sich nicht durchsetzen können. Die Verwendung von pulvrigen Metallegierungen im Kern- bzw. Füllinhalt der Elektrode löste zwar die Probleme, die im Hinblick auf die geforderte genaue prozentuale Zusammensetzung des Schweißmetalls bestehen. Die Verwendung einer solchen Seelenelektrode führte aber zu erhöhten Schwierigkeiten in Bezug auf den Wasserstoff und den Sauerstoff im Schweißmetall der entstehenden Schweißverbindung. Diese Nachteile machten die Verwendung der Metall-Kernelektrode bzw. Seelenelektrode für hochfeste Stähle ungeeignet. Im Hinblick auf die bestehenden Nachteile dieser Elektroden für das MIG-Schweißen hochfester Stähle kann es nicht überraschen, daß der Einsatz von Flußmittel-Seelenelektroden auf das Schweißen hochfester Werkstoffe begrenzt wurde. Die Probleme der Metall-Kernelektroden ergeben sich auch bei den Elektroden mit Flußmittelkern. Darüber hinaus weisen letztere noch weitere Beschränkungen auf.

Eine übliche Flußmittel-Kernelektrode weist ein Titandioxyd-Flußmittelsystem als Pulver im Kern auf, der von einem niedriggekohlten Stahlmantel umschlossen ist. Solche Elektroden ermöglichen ein gutes Schweißen mit hohen Abschmelzleistungen bis zu 3,6 kg/h und können auch für das Schweißen in Außer-Schweißposition eingesetzt werden. Allerdings ergibt sich beim Einsatz dieser Elektroden ein erhöhter Gehalt an diffundierbarem Wasserstoff,der größer ist als selbst bei einem HY-80-Stahl noch hingenommen werden kann. Ferner bewirkt der Sauerstoff eine verhältnismäßig niedrige Charpy-Festigkeit. Der Einsatz einer milden Stahl-Kernelektrode mit einem üblichen Titandioxyd-Flußmittelsystem führt daher zu guten Schweißeigenschaften bei hohen Abschmelzleistungen und entsprechend hoher Akzeptanz seitens des Schweißers. Das sich bildende Schweißmetall weist aber Sauerstoff und Wasserstoff in Anteilen auf, die für die meisten hochfesten Stähle nicht hingenommen werden können. Aufgrund der extrem hohen Qualität und der hohen Abschmelzleistungen, die mit anderen Elektroden mit Flußmittelkern erreichbar sind, wurde angeregt, eine basische Flußmittel-Kernelektrode einzusetzen, die basische Zusammensetzungen, wie Calciumfluorid, verwendet. Diese Elektroden erzeugen eine gute Schlagfestigkeit, da der Fluor die Eigenschaft hat, den Sauerstoff aus dem Schweißmetall zu entfernen bzw. zu spülen. Allerdings können solche Kernelektroden mit basischem Flußmittel nicht für das Schweißen in Außer-Schweißposition zufriedenstellend eingesetzt werden. Sie werden auch vom Schweißer nicht allgemein angenommen, da ihr Einsatz auf das Schweißen von oben beschränkt ist. Diese Elektroden mit basischem Zusatzmaterial sind folglich für Schweißaufgaben bei hochfesten Werkstücken nicht verwendet worden.

Insgesamt ist festzustellen, daß Metall-Kernelektroden, Flußmittel-Kernelektroden und auch Kernelektroden mit basischem Flußmittel bisher für das MIG-Schweißen hochfester Stähle, d.h.von Stählen oberhalb etwa 5624 kg/cm², nicht eingesetzt wurden und für diesen Anwendungsbereich keine Akzeptanz gefunden haben. Lediglich die Verwendung der Massivdrahtelektrode hat sich für diese Schweißaufgaben im militärischen und im industriellen Bereich durchgesetzt.

Nach Vorstehendem bezieht sich die Erfindung demgemäß auf ein Schweißelement, wie eine Elektrode oder einen Zusatz- bzw. Fülldraht, das auch für das Schweißen von Stählen hoher Festigkeit bzw. hoher Streckgrenze oberhalb HY-100 und sogar für Stähle der Klassifikation HY-130 verwendbar ist. Dabei wird eine verbesserte Elektrode in Gestalt einer basischen Metall-Kernelektrode bzw. einer basischen Metall-Seelenelektrode angestrebt, die die vorgenannten Nachteile der basischen Flußmittel-Elektroden vermeidet, welche zu der universellen Verwendung der massiven Metalldrahtelektroden beim MIG-Schweißen hochfester Stähle oberhalb HY-80 führten. Demgemäß ist die Erfindung auf eine basische Metall-Kernelektrode gerichtet, die auch für das Schweißen außerhalb der Normalposition, also für das Außer-Positionsschweißen verwendbar ist, Abschmelzleistungen erheblich oberhalb 2,25 kg/h ermöglicht, dabei eine kleinere Anzahl an Schweißdurchgängen bzw. Schweißlagen gestattet und mit der eine gegenüber dem Schweißen mit einem Massivdraht im wesentlichen verdoppelte Schweißraupe bzw. Schweißnaht erreichbar ist, dies lediglich mit kleinen Schlackeninseln auf der Oberfläche der Schweißraupe bzw. Schweißnaht.

Mit der Erfindung wird eine basische Metall-Kernelektrode, die mit Vorteil für das MIG-Schweißen hochfester Stähle oberhalb 7030 kg/cm² verwendbar ist, bzw. einen für gleiche Zwecke verwendbaren Kernfülldraht bzw. Zusatzdraht geschaffen. Erfindungsgemäß ist eine abschmelzbare Lichtbogenschweißelektrode bzw. ein abschmelzbares Schweißelement vorgesehen,die bzw. das einen Stahlmantel aufweist, der einen verdichteten bzw. kompakten Kern umschließt, der ein Metallegierungspulver enthält. Dieser Kern schließt ferner eine im wesentlichen zu 100 %-basische Masse in einer Menge ein, die, bezogen auf das Gesamtgewicht des Schweißelementes bzw. der Schweißelektrode,kleiner als etwa 1,6 % ist. Das pulvrige Metallegierungsmaterial basiert auf der Standard-Technologie und dient zur Einstellung der Legierungszusammensetzung der sich bildenden Schweißraupe. Die basische Masse besteht aus einem Einstoff-Flußmittel, welches den Sauerstoff im Schweißmetall auf ein Niveau unterhalb von etwa 0,04 % des Schweißmetalls reduziert. Nach der Erfindung besteht die 100%-basische Masse aus Calciumfluoridpulver.

Nach einem weiteren Aspekt der Erfindung und in bevorzugter Ausführung beträgt der Anteil an Calciumfluoridpulver im Kernmaterial etwa 0,1 % bis etwa 0,9 % des Elektrodengesamtgewichts. Mit diesem niedrigen Prozentanteil der Flußmittelbestandteile, nämlich des Calciumfluoridpulvers, werden die oben erörterten Schweißprobleme der Flußmittel-Kernelektroden behoben, wobei das Calciumfluorid zugleich die Menge des im entstehenden Schweißmetall enthaltenen Sauerstoffs kontrolliert.

Nach einem weiteren wesentlichen Erfindungsmerkmal weist die basische Metall-Kernelektrode in einem geringen Anteil ein Mittel auf, das die Menge an diffundierbarem Wasserstoff im Schweißmetall herabsetzt. Dieses Mittel hat einen Schmelzpunkt unterhalb etwa 538° C, so daß es sich in körniger bzw. pulvriger Form in das Kernmaterial einbringen läßt und seine Zusammensetzung während der Formgebung und des Streckziehens der Elektrode beibehält. Dieses Mittel setzt Fluor frei, der während des Lichtbogenschweißens den diffundierbaren Wasserstoff im Schweißmetall einfängt bzw. aufnimmt. Das genannte Mittel besteht erfindungsgemäß aus einem fluorhaltigen Polymer. Dieses Polymer kann bis zu einem Anteil von 0.4 %, bezogen auf das Gesamtgewicht der Elektrode, verwendet werden. Hiermit läßt sich der diffundierbare Wasserstoff auf weniger als 1 ppm und sogar auf etwa 0,6 ppm herabsetzen, also einen Gehalt, der bisher nicht zu erreichen war. Das Polymer mit dem Wasserstoff-Spül- bzw. Reinigungseffekt kann nicht bei massiven Metalldrahtelektroden eingesetzt werden, da es sich hier bei dem für die Herstellung der Drahtelektrode erforderlichen Schmelz- oder Legierungsprozeß verbrauchen bzw. zersetzen würde.

Nach einem Hauptmerkmal der Erfindung weist demgemäß die basische Metall-Kernelektrode als einzigen Flußmittelbestandteil Calciumfluoridpulver im Kernmaterial zusammen mit dem für die Wasserstoffreinigung verwendeten Pulver, nämlich dem fluorhaltigen Polymer auf. Ferner empfiehlt es sich, dem Kernmaterial noch Metallegierungspulver zuzusetzen. Der Kern wird umschlossen von einem niedrig gekohlten Mantel, der sich zu einer Elektrode ausziehen läßt, deren Durchmesser kleiner ist als etwa 2,54 mm. Es ist natürlich auch denkbar, daß der Elektrodenmantel in einem elektrischen Legierungsofen gebildet wird, um zu vermeiden, daß das Legierungsmetall in Pulverform in das Kernmaterial der aufzehrbaren Elektrode eingebracht werden muß. In jedem Fall besteht ein wesentliches Merkmal der Erfindung in der Schaffung einer basischen Metall-Kernelektrode (Seelenelektrode) mit einem einzigen Kernbestandteil, der zu 100 % basisch und im wesentlichen inert ist, und mit einem Wasserstoffreinigungsmittel. Ob dabei das Legierungsmetall sich in genauer Einstellung im Metallmantel oder als Metallegierungspulver im Kernmaterial befindet, ist nicht entscheidend. Das Einbringen der Legierungsstoffe läßt sich unter Anwendung der üblichen Legierungstechnologien durchführen. Dabei ergibt sich aber ein wesentlicher Vorteil, wenn die Legierungsmetalle in das Kernmaterial eingebracht werden. Demgemäß ist die Erfindung auf eine basische Metall-Kernelektrode gerichtet, die die gleichen Gebrauchsvorteile hat wie Massivdrahtelektroden und diese daher ersetzen kann, andererseits aber gegenüber den Massivdrahtelektroden den Vorteil der Verminderung des Sauerstoffs im Schweißmetall und der Herabsetzung der Menge an diffundierbarem Wasserstoff hat. Dies stellt eine neue, in der Schweißtechnik bisher nicht verwirklichte Konzeption eines Schweißelementes bzw. einer Elektrode dar. Mit der Erfindung können daher Stähle auch mit extrem hoher Festigkeit im MIG-Schweißverfahren geschweißt werden, auch im Außer-Positionsschweißen.

Die basische Metall-Kernelektrode nach der Erfindung beruht auf einer Entwicklung, die im Gegensatz steht zur Fachkenntnis und zur herkömmlichen Praxis auf dem Gebiet des Lichtbogen-MIG-Schweißverfahrens hochfester Stähle. Aufgrund der Anwendungsbeschränkung der Kernelektroden wurde bisher in der Schweißtechnologie mit massivem Metalldraht gearbeitet, wobei sich aber die obengenannten Nachteile ergeben. Dieses herkömmliche Schweißverfahren könnte für Stähle mit einer Streckgrenze oberhalb 5624 kg/cm$^2$ (80.000 psi) nicht zufriedenstellend eingesetzt werden. Die Erfindung sieht die Verwendung einer zu 100 % basischen, inerten Masse im Kern- bzw. Füllmaterial der Elektrode vor, wobei für diesen Zweck pulvriges Calciumfluorid verwendet wird. Wenn in der Vergangenheit Calciumfluoridpulver im Kern einer Elektrode verwendet wurde, so in vergleichsweise hohen Prozentanteilen, um die normalerweise sauren Flußmittelbestandteile auszugleichen. Da hier der Prozentanteil an Calciumfluorid verhältnismäßig groß war, ergaben sich Schwierigkeiten beim Außer-Positions-Schweißen. Der Stand der Technik gibt keine Anregung, Calciumfluorid als Bestandteil in einer Kern- bzw. Seelenelektrode zu verwenden, die zum Schweißen im Bereich hoher Streckfestigkeiten auch beim Außer-Positions-Schweißen verwendbar ist. Nach der Erfindung wird Calciumfluoridpulver in neuer Weise verwendet, nämlich als einziger Flußmittelbestandteil im Kern der Elektrode. Die erfindungsgemäße Elektrode enthält kein Flußmittelsystem, wie z.B. ein herkömmliches TiO$_2$-System oder ein basisches Flußmittelsystem. Die Bezeichnung "System" bedeutet, daß zwei oder auch mehr Flußmittelbestandteile vorhanden sind, die im Zusammenwirken die Flußmittelwirkung haben. Nach der Erfindung wirkt das Calciumfluorid mit keinem anderen Flußmittel zusammen, sondern es bildet für sich selbst das Flußmittel. Dabei ist die Menge an Calciumfluorid auf ein Niveau unterhalb etwa 1,6 % und vorzugsweise unterhalb 0,09 %, bezogen auf das Gesamtgewicht der Elektrode, reduziert. Bei dieser kleinen Menge an Calciumfluorid vollzieht sich die Flußmittelwirkung allein durch das Calciumfluorid. Es ist also keine Flußmittelsystem vorhanden. Bei Herabsetzung des Calciumfluoridpulvers auf ein Niveau unterhalb 1,60 % und vorzugsweise unterhalb 0,9 % des Elektrodengewichtes kontrolliert das Calciumfluorid den Sauerstoff im Schweißmetall ohne Beeinträchtigung des Schweißbetriebes und ohne die Möglichkeit zu nehmen, außerhalb der normalen Schweißposition zu arbeiten, wie dies sonst bei Flußmittel-Kernelektroden der Fall ist, die einen größeren Volumenanteil an Calciumfluorid aufweisen. Das Calciumfluorid kann selbst unter die obengenannte obere Grenze (1,60 %) herabgesetzt werden, ohne den Schweißvorgang nachteilig zu beeinflussen. Bei einer unteren Grenze des Calciumfluorids im Annäherungsbereich von 0,2 % steigt aber die Sauerstoffmenge im Schweißmetall auf ein Niveau an, bei dem die Schlagfestigkeit eines hochfesten Stahls, für den die Elektrode speziell entwickelt wurde, vermindert wird. Da das Calciumfluorid zu 100 % basisch und auch inert ist, bildet es ein einziges Flußmittel bzw. einen einzigen Flußmittelbestandteil der Kernelektrode. Die Begrenzung des Calciumfluorids auf den oberen Prozentanteil in der erfindungsgemäßen Elektrode begrenzt auch das Fluor, das aus dem Calciumfluorid zur Verwendung im Schweißmetall verfügbar ist. Da Fluor ein Mittel zur Herabsetzung des diffundierbaren Wasserstoffs ist, der beim Schweißen von hochfesten Stählen zur Schweißrissigkeit führt, sieht die Erfindung nach einem weiteren wesentlichen Merkmal ein den Wasserstoff herabsetzendes Mittel als weiteren Bestandteil vor. Die Verwendung eines solchen Mittels ist ebenfalls neu. Dieses Mittel besteht, wie erwähnt, aus einem fluorhaltigen Polymer, das erfindungsgemäß bis zu einer Menge von 0,4 Gew.-% verwendet wird. Damit läßt sich der diffundierbare Wasserstoff auf ein Niveau unter etwa 1 ppm (1 ml/100 g) herabdrücken.

Wie vorstehend dargelegt, wird nach der Erfindung Calciumfluoridpulver in einem verhältnismäßig kleinen Anteil innerhalb eines exakt definierten Mengenbereichs zusammen mit einer kleinen Menge des wasserstoff-reduzierenden Mittels, nämlich dem fluorhaltigen Polymer, eingesetzt.

Die Erfindung ist in ihrer praktischen Ausführung auf eine basische Metall-Kernelektrode gerichtet und demgemäß befinden sich Legierungsmetalle für das Schweißmetall in Pulverform und in verdichteter Form im Kern. Selbstverständlich ist es auch denkbar, daß die Legierungsstoffe in dem umgebenden Elektrodenmantel enthalten sein können, falls hier in der Legierung des Stahlmantels mit hinreichender metallurgischer Genauigkeit gearbeitet werden kann. In bevorzugter Ausführung der Erfindung und für deren bevorzugte praktische Ausgestaltung ist ein den Kern umschließender niedriggekohlter bzw. niedriglegierter Stahlmantel vorgesehen, wobei die Legierungsmetalle sich in Pulverform im Kern befinden. Demgemäß läßt sich die erfindungsgemäße Elektrode als eine basische Metall-Kernelektrode bzw. eine basische Seelenelektrode bezeichnen. Die Elektrode wird auf die gewünschte Größe gezogen, vorzugsweise zu einer Zylinderelektrode mit einem Durchmesser unterhalb 2,54 mm. Dieser gezogene Fülldraht nach der Erfindung ist mit allen Vorteilen einer Kernelektrode und gleichzeitig mit den Vorteilen der Massivdrahtelektroden für das MIG-Schweißen verwendbar. Aufgrund der Verwendung eines einzigen basischen Bestandteiles in geringen Mengenanteilen im Kern zusammen mit dem den Wasserstoff herabsetzenden Mittel werden der Sauerstoff und der Wasserstoff im Schweißmetall reduziert. Die erfindungsgemäße Schweißelektrode kann, wie erwähnt, mit besonderem Vorteil für das Schweißen hochfester Stähle bzw. von Stählen hoher Streckgrenze eingesetzt werden, wie vor allem einen Stahl mit einer Mindest-Streckgrenze von 7030 $kg/cm^2$ (HY-100) und selbst für Stähle mit einer Streckgrenze von 9140 $kg/cm^2$ (HY-130). Dabei kann die erfindungsgemäße basische Metall-Kernelektrode, wie erwähnt, für das Schweißen außerhalb der Normalposition eingesetzt werden, da das Calciumfluorid in einer genau eingestellten begrenzten Maximalmenge, die unterhalb 1,60 % liegt, vorliegt und in oder an der Elektrode den einzigen Flußmittelbestandteil bildet. Die vorgenannte erfindungsgemäße Elektrode läßt sich im wesentlichen in derselben Weise wie die massiven Drahtelektroden beim MIG-Schweißen einsetzen, und zwar auch beim Schweißen außerhalb der Normal-Position und/oder beim Impuls-Schweißen. Die Vorteile einer Kernelektrode verbinden sich mit den Vorteilen einer massiven Drahtelektrode.

In der Vergangenheit ergaben sich bei Verwendung von Metall-Kernelektroden höhere Gehalte an Sauerstoff. Bei der erfindungsgemäßen Elektrode wird der Sauerstoff durch den Einschluß der Partikel oder Pulverteilchen an Calciumfluorid im Kern reduziert, wobei jedoch der Gehalt an Calciumfluorid auf kleine Mengen unterhalb 1,60 % begrenzt wird, so daß die bisher bei Verwendung von Calciumfluorid bestehenden Schwierigkeiten, insbesondere die Unmöglichkeit zum Impuls-Schweißen in Außer-Schweißposition, vermieden werden. Die Verminderung des Calciumfluorids im Kernmaterial in der erfindungsgemäßen Weise ist neu. Ein wesentlicher Aspekt der Erfindung ergibt sich aus der Erkenntnis, daß höhere Anteile an Calciumfluorid in einem basischen Flußmittelsystem nicht erforderlich sind, wenn als Flußmittel lediglich Calciumfluorid eingesetzt wird. Durch das Calciumfluorid wird auf diese Weise ein basischer Schmelzfluß erreicht. Durch die Vermeidung eines weiteren Bestandteils des basischen Flußmittelsystems kann Calciumfluorid in kleineren Mengen eingesetzt werden, wobei sich zugleich annehmbare Schweißeigenschaften für die Elektrode erreichen lassen. Nach der Erfindung wird die Chemie des Calciumfluorids so kontrolliert eingestellt, daß lediglich genügend Calciumfluorid zum Reinigen bzw. Spülen des Sauerstoffs im Schweißmetall zur Verfügung steht. Das Calciumfluorid stellt also nicht einen von mehreren Bestandteilen im basischen Flußmittelsystem dar. Vielmehr bildet das Calciumfluorid bei der erfindungsgemäßen Elektrode den gesamten basischen Fluß- bzw. Schmelzmittelbestandteil. Mit dieser Calciumfluorid-Einstellung ergibt sich eine basische Metall-Kernelektrode mit gegenüber den Massivdrahtelektroden verbesserten Schweißeigenschaften. Die Menge an Calciumfluorid reicht aus, um den Sauerstoffgehalt im Schweißmetall zu kontrollieren bzw. zu minimieren und damit dessen Einfluß auf die Schlagfestigkeit der entstehenden Schweiße zu unterdrücken. Legierungsmetalle im Kern oder im Metall des den Kern umschließenden Mantels können zur Erzielung der Charpy-Kerbzähigkeit zugesetzt werden.

Da zusätzliche Mengen an Calciumfluorid in der Elektrode nicht benötigt werden, um weitere Flußmittelbestandteile eines Mehrkomponenten-Flußmittelsystems auszugleichen, läßt sich die Elektrode mit Vorteil beim Impulsschweißen auch bei jeder Schweißposition außerhalb der Normalposition in gleichem Maße einsetzen wie die beim MIG-Schweißen verwendeten Massivdrahtelektroden. Demgemäß wird mit der Erfindung eine basische Kern- bzw. Seelenelektrode mit einem einzigen Flußmittelbestandteil geschaffen, der zu 100 % basisch und inert ist. Dies steht im Gegensatz zu den Flußmittelsystemen anderer Elektrodentypen einschließlich derjenigen des Titandioxyd-Typs, der aber schädlich ist für die Kerbfestigkeit des Schweißmetalls. Die Verwendung konventioneller Flußmittelelektroden ist für das Schweißen hochfester Stähle, wie sie insbesondere für militärische Zwecke eingesetzt werden, und die im Bereich des Stahl HY-100 oder darüber liegen, nicht möglich.

Aus der Vergangenheit kennt man Metall-Kernelektroden und basische Flußmittel-Kernelektroden. Diese beiden Elektroden sind aber niemals als Ersatz für einen massiven Metalldraht beim MIG-Schweißen hochfester Stähle, wie sie z.B. bei Marine-Fahrzeugen oder im sonstigen militärischen oder handelsüblichen Bereichen eingesetzt werden, in Betracht gezogen worden.Außerdem sind diese basischen Flußmittel-Kernelektroden nicht für das Schweißen außerhalb der Normalposition verwendbar. Sie weisen einen engeren Anwendungsbereich und niedrige Abschmelzleistungen auf, die unterhalb 2,25 kg/h liegen. Mit der vorliegenden Erfindung wird dagegen eine Kernelektrode geschaffen, die eine Kombination aus Metall und basischem Material darstellt und die für die angegebenen Zwecke verwendbar ist. Die nicht-metallischen Bestandteile im Kernmaterial sind hierbei auf Calciumfluorid und das fluorhaltige Polymer als ein den Wasserstoff entfernendes Mittel, falls dieses ausgewählt wird, beschränkt. Es sind keine weiteren nichtmetallischen Stoffe vorhanden, die ein Gesamt-Flußmittelsystem bilden, wie dies normalerweise der Fall ist.

Es hat sich gezeigt, daß eine basische Metall-Kernelektrode nach der Erfindung, wie sie vorstehend beschrieben ist, für das Schweißen hochfester Stähle mit besonderen Vorteilen eingesetzt werden und hierbei das gebräuchliche Elektrodenmaterial aus einem massiven Schweißdraht ersetzen kann. Um eine Kernelektrode mit noch weiter verbesserten Eigenschaften zu erreichen, ist erfindungsgemäß ein Bestandteil zur Herabsetzung des diffundierbaren Wasserstoffs des Schweißmetalls vorgesehen. Es wird angenommen, daß der Wasserstoff von der Feuchtigkeit herrührt, die durch Kapillarwirkung oder auf andere Weise in die Naht des den Elektrodenkern umhüllenden Mantels eindringt. Die Neigung zur Rißbildung erhöht sich mit der Zunahme der Streckfestigkeit des zu schweißenden Grundmetalls. Mit zunehmender Festigkeit nimmt daher die Menge an Wasserstoff, die im Schweißmetall noch toleriert werden kann, ab. Der Wasserstoff geht mit im Kernmaterial enthaltenen Verunreinigungen, mit etwaigen an der Elektrode anhaftenden Schmierstoffen und mit von der Elektrodenherstellung herrührenden Streckfetten u.dgl. in das Schweißmetall. Die militärischen Spezifikationen verlangen weniger als 2 ml/100 g beim Schweißen unter Raumtemperatur für einen Stahl im Bereich von 5765 bis 6186 kg/cm$^2$ (82.000 bis 88.000 psi). Um dieser Forderung zu entsprechen, werden die verwendeten massiven Drähte nach ihrer Herstellung gereinigt. Diese Reinigung vermindert die Eignung des Drahtvorschubs unter Einhaltung der Vorschriften. Eine Erhitzung des Basismetalls führt zu einem Austreiben der Feuchtigkeit von dessen Oberfläche. Das Erhitzen vor dem Schweißvorgang stellt demgemäß einen anderern Weg zur Begrenzung des Wasserstoffs im Schweißmetall dar. Zu demselben Zweck werden von einigen Herstellern nahtlose Röhrchen für die Kernelektroden vorgesehen, um zu vermeiden, daß Feuchtigkeit durch die Naht des Röhrchens in das Kernmaterial eindringt. Welche Maßnahmen auch immer getroffen werden, Wasserstoff ist stets im Schweißmetall anwesend. Der Wasserstoff hat seinen Ursprung aus der Feuchtigkeit im Schutzgas und an der Oberfläche der zu verschweißenden Grundmetalle oder als in den Verbindungsbereich der Grundmetalle eingedrungener Wasserstoff. Es bestehen andere Wasserstoffquellen, wodurch die Möglichkeit zur Eleminierung des Wasserstoffs, der schon in kleinen Mengen bei hochfesten Stählen mit Festigkeiten oberhalb 5624 kg/cm$^2$ (80.000 psi) Probleme schafft, zusätzlich kompliziert wird. Mit der vorliegenden Erfindung ist es möglich, die stets anwesenden, unerwünschten kleinen Wasserstoffmengen zu tolerieren und deren Auswirkung durch eine neue Formulierung der Elektrode zu unterbinden. Da die Menge an Calciumfluorid verhältnismäßig klein ist, steht auch nur eine kleine Fluormenge zur Verminderung des diffundierbaren Wasserstoffs zur Verfügung. Die Menge an Wasserstoff muß bei hochfesten Stählen, wie dem Stahl HY-100, unterhalb 2 ppm, insbesondere beim Schweißen unter Raumtemperatur, liegen. Mit der Erfindung läßt sich diese Forderung durch Verwendung des Calciumfluorids in der begrenzten Menge erfüllen. Es ist aber höchst wünschenswert, den Wasserstoff noch unter die 2 ppm-Grenze zu senken, die durch die Militär-Spezifikation als Bedingung für das Hochfestigkeitsschweißen gegeben ist. Dies kann nach der Erfindung dadurch bewirkt werden, daß ein wasserstoffreduzierendes Mittel in der Elektrode vorgesehen wird. Ein solches Mittel ist das oben erwähnte fluorhaltige Polymer, wie z.B. in Gestalt eines Fluorkohlenstoffs. Dieses Mittel setzt Fluor frei, der sich mit dem diffundierbaren Wasserstoff kombiniert. Es ist bei Temperaturen, wie sie bei der Elektrodenherstellung auftreten, fest. Dies läßt sich dadurch erreichen, daß ein Polymer verwendet wird, welches Temperaturen von etwa 530°C (1000°F) standhält. Das Mittel des Polymertyps muß sich zu feinem Pulver verarbeiten lassen, das sich mit dem Metallpulver und dem Calciumfluoridpulver mischen läßt. Es muß außerdem schmelzend, nichthygroskopisch und auch sonst inert sein. Selbstverständlich können in dem Polymer weder Wasserstoffatome noch Stickstoffatome enthalten sein. Bei dem bevorzugten Ausführungsbeispiel wird das obengenannte Mittel des Polymer-Typs zusammen mit Calciumfluoridpulver verwendet, um ein System zu bilden, das mit den Metallegierungspulvern im Kern der Elektrode kombiniert wird. Das Fluor aus dem kleinen Calciumfluoridanteil unterstützt die Wasserstoffentfernung. Das fluorhaltige Polymer vermindert die Wasserstoffmenge noch weiter, so daß im Ergebnis die Wasserstoffmenge im Schweißmetall deutlich unter 2 ppm liegt. Wie bekannt, ist der Wasserstoff in seiner einatomigen Form hauptsächlich der schädliche Bestandteil, der die Rißbildung im Schweißmetall bewirkt. Die Kombination des Wasserstoffs mit Fluor setzt diese Form des freien Wasserstoffs herab. Zusätzlich schließt sich der einatomige Wasserstoff zu einem Wasserstoffmolekül zusammen, das die Rißeigenschaften des Schweißmetalls nicht ernsthaft beeinträchtigt. Demgemäß setzt das Fluor die Neigung zur Schweißrissigkeit des Schweißmetalls herab. Diese deutliche Verminderung des diffundierbaren Wasserstoffs ist von besonderer positiver Bedeutung, wenn, wie bei einem HY-130-Stahl, die Kerbzähigkeit ein Problem darstellt.

Wie weiter oben dargelegt wurde, waren Kern- bzw. Fülldrahtelektroden in der Vergangenheit empfindlich in Bezug auf Schwankungen im Elektrodenüberstand, da dies Rückwirkungen auf die Menge des im Schweißmetall befindlichen Wasserstoffs hat. Es konnte festgestellt werden, daß das erfindungsgemäß vorgesehene wasserstoff-reduzierende Mittel keine nennenswerte Empfindlichkeit im Hinblick auf den Elektrodenüberstand aufweist und bei normalen Schwankungen im Elektrodenüberstand, wie sie beim MIG-Schweißprozeß auftreten, im wesentlichen dieselben Gehalte an diffundierbarem Wasserstoff im Schweißmetall erzeugen.

Nach einem weiteren Merkmal der Erfindung wird der aus dem körnigen bzw. pulvrigen Material bestehende Kern von einem Stahlmantel mit niedrigem Kohlenstoffgehalt umschlossen, der zur Verdichtung des Kernmaterials im Durchmesser reduziert wird, und zwar bis auf einen Außendurchmesser, der kleiner ist als 2,54 mm. Ein solcher milder oder niedrig legierter Stahlmantel umhüllt eine kleine Menge an Calciumfluoridpulver und eine Spur des wasserstoff-reduzierenden, fluorhaltigen Polymers. Ferner wird dem Kernmaterial Metallpulver zugesetzt, welches bei Verwendung der erfindungsgemäßen Elektrode das entstehende Schweißmetall auflegiert. Auf diese Weise wird eine basische Metall-Kernelektrode erhalten, die die Standard-Massivdrahtelektrode, wie sie beim MIG-Schweißen hochfester Stähle eingesetzt wird, ersetzen kann und bei der mit einem Anteil von 0,02 bis 0,04 % an Polymer der sich einstellende Anteil an diffundierbarem Wasserstoff unterhalb 2 ppm und sogar unter 1 ppm liegt. Dies konnte bisher nicht erreicht werden. Die Erfindung kann im übrigen auch für einen Fülldraht verwendet werden, der beim TIG-Schweißen eingesetzt wird.

Nach Vorstehendem ist also die Erfindung auf eine Metall-Kernelektrode (Seelenelektrode) mit einem basischen Bestandteil, wie insbesondere pulvrigem Calciumfluorid gerichtet, wobei auf dieser Basis eine Gruppe basischer Metall-Kernelektroden hergestellt werden kann. Eine weitere Zielrichtung der Erfindung besteht darin, eine basische Metall-Kernelektrode zu schaffen, die mit Vorteil unter Einsatzbedingungen verwendbar ist, wo ein niedrigerer Schweißmetall-Sauerstoffgehalt gefordert wird. Der Sauerstoffgehalt wird dabei durch die Chemie des basischen Bestandteils, wie des pulverförmigen Calciumfluorids, gesteuert. Weiterhin ist die Erfindung auf eine Kern- bzw. Fülldrahtelektrode gerichtet, die beim Impulsschweißen außerhalb der normalen Schweißposition in einer Weise verwendet werden kann, wie dies bisher beim MIG-Schweißen den massiven Drahtelektroden vorbehalten war. Darüber hinaus ist es ein Anliegen der Erfindung, eine Kernelektrode zu schaffen, die im Kern ein Mittel zur Verminderung des diffundierbaren Wasserstoffs im Schweißmetall enthält. Ein weiteres Anliegen der Erfindung besteht darin, eine basische Metall-Kernelektrode zu schaffen, die mit besonderem Vorteil bei Schweißanwendungen von Stählen hoher Streckgrenze, wie den Stählen der Klassifikation HY-80, HY-100 und HY-130 eingesetzt werden kann, wo die Wasserstoffrissigkeit eine besondere Rolle spielt.

Weiterhin ist die Erfindung auf eine Kern- bzw. Seelenelektrode gerichtet, die im Kern Calciumfluorid in einem Gehalt im allgemeinen Bereich von 0,1 % bis 1,6 %, bezogen auf das Gesamtgewicht der Elektrode, und vorzugsweise im Bereich von 0,1 % bis 0,9 % enthält. Da der Fluor im Schweißlichtbogen einen Pinch-Effekt bewirkt, der eine Spritzerwirkung und Schlackenbestandteile im Metall bei abnehmender Schweißgeschwindigkeit beim Impulsschweißen außerhalb der Normal-Schweißposition zur Folge hat, ergibt sich bei Begrenzung des Calciumfluorides in der Elektrode auf höchstens etwa 0,9 % des Elektrodengewichts ein Anstieg in der Qualität in der entstehenden Schweiße.

Weiterhin ist die Erfindung auf eine Kern- bzw. Fülldrahtelektrode gerichtet, die mit besonderem Vorteil auf dem Gebiet hochfester Schweißverbindungen einsetzbar ist, wobei mit einem verminderten Sauerstoffgehalt höhere Schlagfestigkeitseigenschaften und auch eine Verbesserung in der Mikrostruktur des Schweißmetalls erhalten werden.

Schließlich ist die Erfindung auf eine basische Metall-Kernelektrode zur Verwendung beim hochfesten Schweißen bzw. beim Schweißen von Werkstoffen hoher Streckgrenze gerichtet, die in pulvriger Form Calciumfluorid oder Bariumfluorid, gegebenenfalls auch Lithiumfluorid, Natriumfluorid oder Kaliumfluorid enthält, wobei in bevorzugter Weise Calciumfluoridpulver verwendet wird.

Die Erfindung wird nachfolgend im Zusammenhang mit den in der Zeichnung gezeigten Ausführungsbeispielen näher erläutert. In der Zeichnung zeigen:

Figur 1    in schematischer Querschnittsdarstellung eine basische Metall-Kernelektrode gemäß der Erfindung;

Figur 2    in der Darstellung der Fig. 1 eine Modifikation der Elektrode gemäß der bevorzugten Ausführungsform;

Figur 3    ein Diagramm, welches die Abhängigkeit zwischen der basischen Masse der Elektrode und dem Schweißmetall-Sauerstoffgehalt zeigt;

Figur 4    ein Diagramm, welches die Abhängigkeit zwischen dem Prozentgehalt eines fluorhaltigen Polymers an dem gesamten Elektrodengewicht und der Konzentration von diffundierbarem Wasserstoff im Schweißmetall wiedergibt.

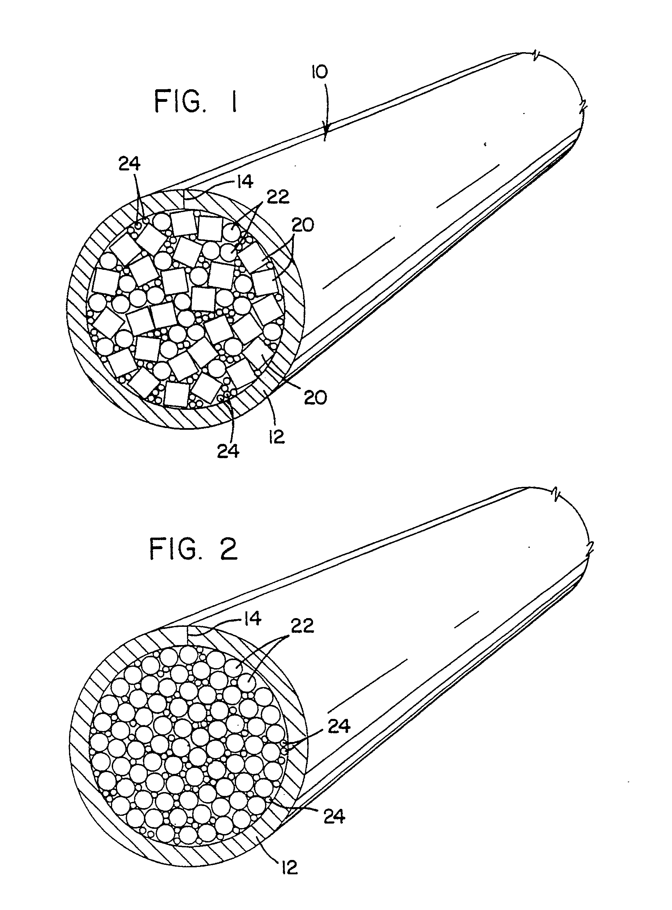

Die Zeichnung zeigt ein bevorzugtes Ausführungsbeispiel der Erfindung, das im Zusammenhang mit einem einzigen Beispiel erläutert wird. Bei diesem Beispiel werden zwei Platten oder Bleche von 25,4 mm Dicke unter Verwendung eines zu 98 % aus Argon und zu 2 % aus Sauerstoff bestehen-Schutzgases mit einer Wärmezufuhr von 55 bis 100 Kilojoules/25,4 mm mit Vorerwärmen der Bleche auf eine Temperatur von 121°C verschweißt.Die Bleche bestehen aus solchen hoher Streckgrenze, nämlich einem Militär-Stahl HY-100. Zur Verschweißung wurde eine basische Metall-Kernelektrode 10 verwendet, die einen Stahlmantel 12 mit niedrigem Kohlenstoffgehalt und mit einer Verbindungsnaht 14 aufweist, wie dies in Fig. 1 schematisch gezeigt ist.

Die Naht 14 des Mantels 12 kann als Überlappungsnaht oder in anderer Weise entsprechend der bei der Herstellung von Schweißelektroden 10 gängigen Praxis hergestellt werden. Im Inneren der Umhüllung bzw. des Mantels 12 befindet sich ein kompakter bzw. verdichteter Kern, bestehend aus Partikeln 20 eines Legierungsmaterials (gezeigt als Quadrate), aus Calciumfluoridpartikeln 22 (gezeigt als große Kreise) und in kleiner Menge aus Partikeln eines fluorhaltigen Polymers 24 (dargestellt als kleine Kreise).

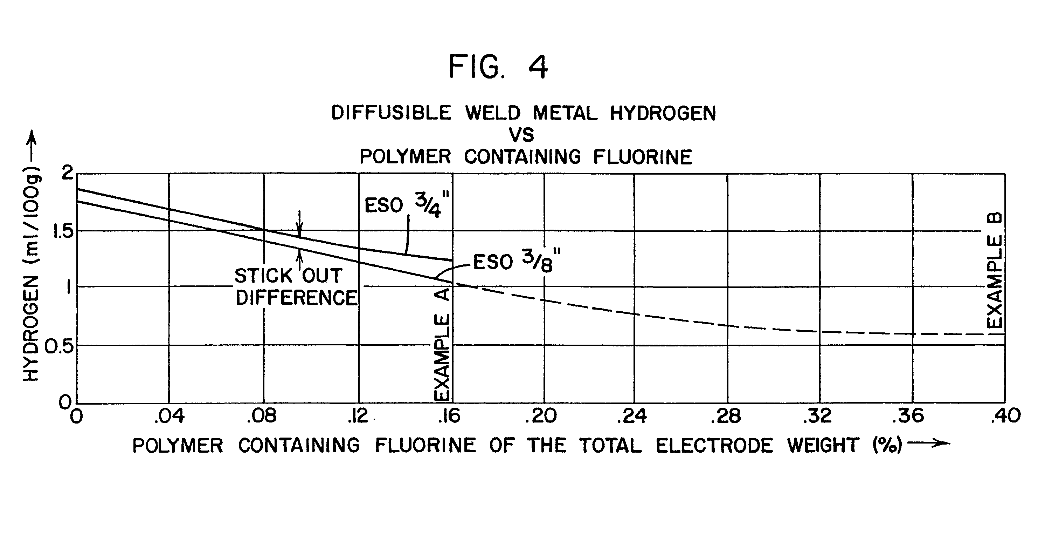

Dieser Kern wird durch Streckziehen der Elektrode 10 auf einen Durchmesser unterhalb 2,54 mm verdichtet. Im gezeigten Beispiel beträgt die Menge des fluorhaltigen Polymers 0,16 % des Elektrodengesamtgewichts für Beispiel A und 0,40 Gew.-% für Beispiel B (vgl. Fig. 4). Der Prozentanteil der Calciumfluoridpartikel am Elektrodengesamtgewicht beträgt 0,5 %. Die Metallegierungspartikel 20 sind in einem Prozentanteil von etwa 19 % des Elektrodengesamtgewichts im Kernmaterial enthalten. Das verbleibende Gewicht ist dasjenige des Mantels bzw. Röhrchens 12. Mit diesem Beispiel der Elektrode läßt sich eine zufriedenstellende Schweißung eines hochfesten Militär-Stahls, wie z.B. eines solchen der Klassifikation HY-100, errеichen.

Fig. 2 zeigt eine Modifikation des bevorzugten Ausführungsbeispiels der Erfindung, bei der im Inneren des Mantels 12 befindliche Kern lediglich Calciumfluoridpulver 22 und Pulver 24 des wasserstoff-reduzierenden Mittels aufweist. Bei dieser Ausführungsform befinden sich die Legierungsbestandteile in dem den Mantel 12 bildenden Metall. Die verschiedenen Zusammensetzungen der Legierungsstoffe sind nicht Teil der Erfindung; sie lassen sich im Rahmen der Erfindung unterschiedlich einstellen. In so weit ist die Erfindung im wesentlichen nur auf das Konzept des einzigen Flußmittelbestandteils, d.h. des Calciumfluorides, zusammen mit dem vorzugsweise im Kernmaterial befindlichen Legierungsmaterial und dem im Kern enthaltenen wasserstoff-reduzierenden Mittel gerichtet. Die Auswahl der Legierungsstoffe erfolgt für den jeweiligen Schweißvorgang nach den bekannten Gesichtspunkten.

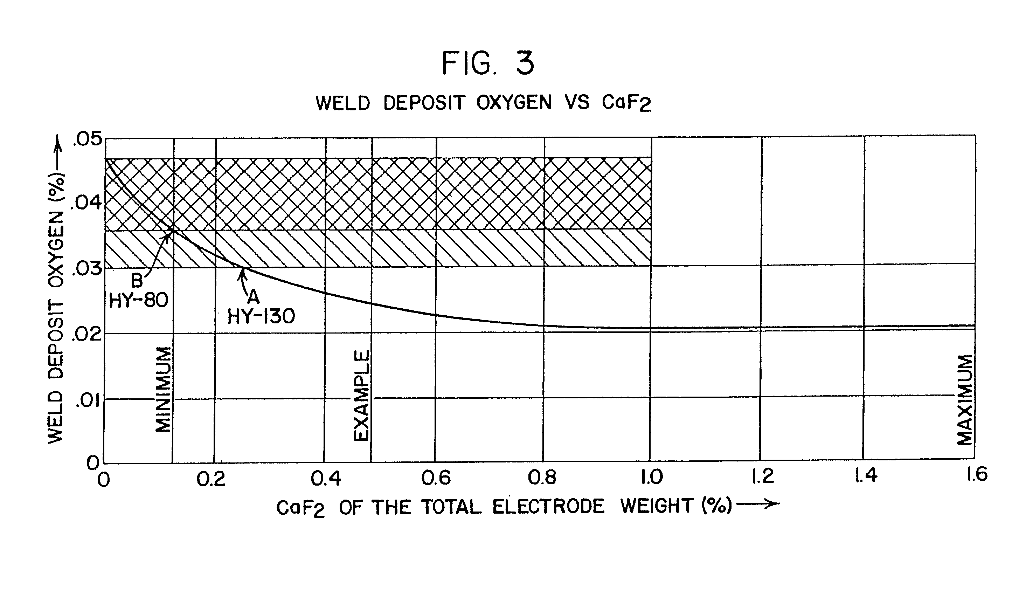

Wie das Diagramm nach Fig. 3 zeigt, beträgt die Menge an Calciumfluoridpartikeln im Kern weniger als etwa 1,6 % des Elektrodengesamtgewichts. Bei oder im Bereich einer Calciumfluorid-Menge von 1 % liegt der Punkt,an dem die Schweißgüte beginnt, ihre Eignung zu verlieren.Ein Wert über etwa 1,6 % ergibt eine Schweißelektrode, die für den Gebrauch beim Schweißen von Stählen hoher Streckgrenze in den verschiedenen Schweißpositionen nicht zufriedenstellt. Mit abnehmendem Calciumfluoridgehalt erhöht sich die Sauerstoffmenge in der Ausschweißung bzw. in der Schweißablagerung. Mit zunehmender Streckgrenze des hochfesten Stahls kann eine kleinere Sauerstoffmenge im Schweißmetall enthalten sein, um den militärischen Spezifikationen zu entsprechen und eine akzeptable Schlagfestigkeit zu erzielen. Für einen hochfesten Stahl in höherem Bereich, wie HY-130, muß die im Schweißmetall befindliche Sauerstoffmenge kleiner sein als für einen hochfesten Stahl der Güteklasse HY-80. Demgemäß liegt der Mindestgehalt an Calciumfluorid für einen HY-130-Stahl in der Kurve gemäß Fig. 3 bei A. Für einen hochfesten Stahl geringerer Festigkeit, wie einem HY-80-Stahl, kann der Sauerstoffgehalt im Schweißmetall geringfügig höher liegen. Dies ist in der graphischen Darstellung durch die Position B angegeben. Die Mindestgrenze an Calciumfluorid schwankt demgemäß nach Maßgabe der Streckgrenze bzw. Streckfestigkeit des hochfesten Stahls, für den die Erfindung speziell anwendbar ist. In allen Fällen weist die Schweißmetallegierung einen niedrigen Sauerstoffgehalt auf, der für das Schweißen hochfester Stähle erforderlich ist. Die Möglichkeit für einen höheren Sauerstoffgehalt ist in Fig. 3 lediglich zum Zwecke der Beschreibung der Erfindung gezeigt, die im übrigen die für die praktische Verwendung der Erfindung erforderlichen Mindestgrenzen für das Calciumfluorid wiedergibt.

Die grafische Darstellung nach Fig. 4 zeigt die Abhängigkeit zwischen dem Prozentanteil an dem fluorhaltigen Polymer, wie vor allem Tetrafluoräthylen, und dem Gehalt an diffundierbarem Wasserstoff im Schweißmetall. Der Wasserstoffwert ist hier dargestellt durch den Parameter ml/100 g. der in direkter Beziehung zu ppm steht. In der Praxis sollten hochfeste Stähle einen Gehalt an diffundierbarem Wasserstoff unterhalb 2,0 ppm aufweisen. Ein Wasserstoffgehalt unter 1,0 ppm ist im allgemeinen nicht erreichbar, es sei denn unter extrem genauen Arbeitsbedingungen, die aber für das erfindungsgemäße Anwendungsgebiet nicht in Betracht kommen. Es ist ersichtlich, daß durch Zusatz des Calciumfluoridpulvers zu den Metallegierungspulvern ein Wasserstoffgehalt unter 2,0 ppm selbst ohne Verwendung des wasserstoff-reduzierenden Mittels erreichbar ist. Erfindungsgemäß wird aber das genannte wasserstoff-reduzierende Mittel zugesetzt, um den Wasserstoffgehalt im Schweißmetall noch weiter zu vermindern. Durch Zugabe von 0,16 % an fluorhaltigem Polymer bei dem ersten Beispiel A ergibt sich mit dieser kleinen Menge des Mittels eine beträchtliche Wasserstoffverminderung im Schweißmetall. Nach dem bevorzugten Ausführungsbeispiel der Erfindung und nach einem wesentlichen Erfindungsmerkmal wird dieses wasserstoff-reduzierende Mittel eingesetzt, um die Menge an schädlichem diffundierbarem Wasserstoff im Schweißmetall herabzusetzen. Die obere voll ausgezogene Kurve in Fig. 4 repräsentiert die Verhältnisse bei einem elektrischen Elektrodenüberstand von 19,5 mm. Die untere voll ausgezogene Kurve entspricht einem elektrischen Elektrodenüberstand von 19,5 mm. Es ist erkennbar, daß durch die Zugabe des genannten Mittels zu dem Kernmaterial der Elektrode 10 die Empfindlichkeit des Elektrodenüberstandes in Bezug auf den Wasserstoffgehalt sehr gering ist. Dies stellt einen wesentlichen Vorteil gegenüber anderen Maßnahmen zur Minimierung des diffundierbaren Wasserstoffs auf ein solch niedriges Niveau dar. Die beiden Kurven beziehen sich auf das Beispiel A. In ihrer strichpunktiert gezeigten Verlängerung ergibt sich für das Beispiel B ein extrem niedriger Wasserstoffgehalt bei einem Anteil von 0,4 % Polymer. Der erhöhte Polymergehalt nach dem Beispiel B ist gezeigt, um deutlich zu machen, wie die Reduktion des Schwefels auf unter 0,008 und etwa 0,004 % des Elektrodengewichtes zu einer Herabsetzung des Magnesiums von etwa 0,16 % auf weniger als 0,3 % führt. Beispiel B ist ein aktuelles Beispiel für den Fall eines Schwefelgehaltes von etwa 0,004 % und einen Magnesiumgehalt von weniger als 0,3 %. Das Schweißmetall weist einen Gehalt an diffundierbarem Wasserstoff von etwa 0,6 ppm auf. Dieser Wert ist für das Schweißen hochfester Stähle hervorragend und konnte bisher nicht erreicht werden.

**Patentansprüche**

1. Abschmelzendes Schweißelement für das Lichtbogenschweißen mit einem Stahlmantel, der einen kompakten Kern umschließt, der pulvriges Calciumfluorid in einer für den Schmelzfluß des Schweißelementes ausreichenden Menge als im wesentlichen einzigen Bestandteil des Flußmittelsystems enthält, **dadurch gekennzeichnet,** daß der Kern bis zu etwa 0,4 % eines Mittels zur Herabsetzung der Menge an diffundierbarem Wasserstoff im Schweißmetall enthält, wobei das Mittel aus einem fluorhaltigen Polymer besteht bzw. dieses aufweist.

2. Schweißelement nach Anspruch 1, **dadurch gekennzeichnet,** daß das Kernmaterial, bezogen auf das Gesamtgewicht des Schweißelementes, weniger als etwa 1,6 % Calciumfluorid enthält.

3. Schweißelement nach Anspruch 1 oder 2, **dadurch gekennzeichnet,** daß das Kernmaterial zwischen etwa 0,1 % und etwa 0,9 % Calciumfluorid, bezogen auf das Gesamtgewicht des Schweißelementes enthält.

4. Schweißelement nach einem der Ansprüche 1 bis 3, **dadurch gekennzeichnet,** daß der Kern, bezogen auf das Gesamtgewicht des Schweißelementes, weniger als etwa 0,3 % des wasserstoff-reduzierenden Mittels enthält.

5. Schweißelement nach einem der Ansprüche 1 bis 3, **dadurch gekennzeichnet,** daß der Gehalt an dem wasserstoff-reduzierenden Mittel, bezogen auf das Gesamtgewicht des Schweißelementes, im Bereich von 0,2 % bis etwa 0,4 % liegt.

6. Schweißelement nach einem der Ansprüche 1 bis 5, **dadurch gekennzeichnet,** daß der Kern pulvrige Metallegierungsstoffe enthält.

7. Schweißelement nach einem der Ansprüche 1 bis 6, **dadurch gekennzeichnet,** daß die Legierungsstoffe und der Stahlmantel zusammen weniger als etwa 0,2 % Kohlenstoff, bezogen auf das Gesamtgewicht des schweißelementes, enthalten.

8. Schweißelement nach Anspruch 6 oder 7, **dadurch gekennzeichnet,** daß die Legierungsstoffe und der Stahlmantel zusammen zumindest Mangan, Silicium, Molybdän, Nickel und Titan enthalten.

FIG. 1

FIG. 2

# FIG. 3

## WELD DEPOSIT OXYGEN VS CaF₂

EP 0 447 666 A1

# FIG. 4

DIFFUSIBLE WELD METAL HYDROGEN
VS
POLYMER CONTAINING FLUORINE

EP 0 447 666 A1

Europäisches
Patentamt

**EUROPÄISCHER
RECHERCHENBERICHT**

Nummer der Anmeldung

**EP 90 12 5182**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-1 190 597   (K. BEYERSDORFER) <br> – – – | | B 23 K 35/368 |
| A | US-A-3 318 729   (J.C. SIEGLE et al.) <br> – – – | | |
| A | US-A-3 868 487   (Y. ITO et al.) <br> – – – | | |
| A | US-A-4 071 734   (A.V. ZARECHENSKY et al.) <br> – – – | | |
| A | AUTOMATIC WELDING, Band 38, Nr. 1, Januar 1985, Seiten 41-43, Abingdon, Cambridge, GB; V.V. CHIGAREV et al.: "A fluoroplastic material in flux-cored strip to reduce the hydrogen content of deposited metal" <br> – – – | | |
| D,E | EP-A-0 417 546   (LINCOLN) <br> * Patentansprüche 1-8,21-23 * <br> – – – – – | 1-8 | |

| | |
|---|---|
| | **RECHERCHIERTE SACHGEBIETE (Int. Cl.5)** |
| | B 23 K |

Der vorliegende Recherchenbericht wurde für alle Patentansprüche erstellt

| Recherchenort | Abschlußdatum der Recherche | Prüfer |
|---|---|---|
| Den Haag | 02 Mai 91 | MOLLET G.H.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument